**Europäisches Patentamt**

**European Patent Office**

**Office européen des brevets**

(19)

(11) Veröffentlichungsnummer : **0 054 931**
**B1**

(12)

# EUROPÄISCHE PATENTSCHRIFT

(45) Veröffentlichungstag der Patentschrift :
**12.02.86**

(21) Anmeldenummer : **81110583.2**

(22) Anmeldetag : **18.12.81**

(51) Int. Cl.⁴ : **B 60 B 3/04**, B 21 D 53/26, B 23 K 20/12

(54) **Verfahren zum Herstellen einer Radfelge aus Aluminium.**

(30) Priorität : **23.12.80 AT 6288/80**

(43) Veröffentlichungstag der Anmeldung :
**30.06.82 Patentblatt 82/26**

(45) Bekanntmachung des Hinweises auf die Patenterteilung : **12.02.86 Patentblatt 86/07**

(84) Benannte Vertragsstaaten :
**BE CH DE FR GB IT LI NL SE**

(56) Entgegenhaltungen :
**CH-A- 351 512**
**DE-A- 1 927 932**
**DE-A- 2 007 381**
**DE-A- 2 647 464**
**DE-A- 2 715 343**
**DE-A- 3 003 338**
**DE-A- 3 017 546**
**DE-B- 1 068 654**
**FR-A- 2 339 451**
**GB-A- 507 801**
**US-A- 3 874 736**

(73) Patentinhaber : **Austria Metall Aktiengesellschaft**
**A-5282 Braunau am Inn (AT)**

(72) Erfinder : **Koser, Jaroslav, Dipl.-Ing.**
**Klosterstrasse 12**
**A-5282 Ranshofen (AT)**
Erfinder : **Laimighofer, Johann**
**Sparkassenstrasse 15**
**A-5280 Braunau (AT)**

(74) Vertreter : **Hain, Leonhard, Dipl.-Ing.**
**Tal 18/IV**
**D-8000 München 2 (DE)**

## Beschreibung

Die Erfindung betrifft eine Radfelge aus Aluminium-Knetmaterial für luft- oder gummibereifte Fahrzeuge gemäß dem Oberbegriff des Patentanspruches 1.

Im Automobilbau werden die Radfelgen überwiegend aus Stahlblech hergestellt. Es sind auch Aluminium-Gußräder bekannt, die meist ein besonderes Design aufweisen. Geschmiedete Aluminium-Radfelgen konnten bisher aus Kostengründen keine bedeutende Marktposition errigen, da sie außerdem stilistisch den Gußfelgen unterlegen sind. Für den Einsatz einer Aluminium-Radfelge sind auch Materialeinsparungen wichtig. Die herkömmlichen Verfahren zur Herstellung von Aluminium-Radfelgen wenden die Fertigungsmethoden für Stahlblechräder an, wobei das Felgenbett in eine bekannte Form gedrückt und quergeschweißt wird und die geprägte Felgenschüssel durch Schweißverfahren, wie beispielsweise MIG und Elektronenstrahlschweißen, mit dem Felgenbett verbunden wird. Bei einer bekannten Radfelge aus Aluminium (DE-A-20 07 381) ist eine Radschüssel am Boden des Felgenbettes angeschweißt. Bei dieser zweiteiligen Felge werden die beiden Teile getrennt voneinander aus Blech hergestellt. Dabei ist das Felgenbett einstückig aus einem Blechstreifen mit einer Querverbindungsnaht geformt. Dies hat den Nachteil, daß eine präzise Nachbearbeitung erforderlich ist und in der Regel eine Unwucht trotzdem nicht vermieden werden kann. Es kommt außerdem hinzu, daß getrennt hergestellte Felgenteile sich auch im Werkstoff unterscheiden. Zur Herstellung einer einteiligen Leichtmetallfelge (DE-B-1 068 654) ist es bekannt, die Felge über ein Vorwerkstück auszuformen. Dazu sind viele Arbeitsvorgänge, wie Schmieden, Pressen, Drükken und Walzen, erforderlich. Diese vielfältigen Bearbeitungsvorgänge machen die Herstellung kompliziert und teuer. Der Vorteil, daß sowohl Felgenschüssel und Felgenbett aus demselben Material bestehen, wird dadurch mehr als aufgehoben.

Der Erfindung liegt daher die Aufgabe zugrunde, ein Verfahren zur Herstellung einer Aluminium-Radfelge vorzuschlagen, mit dem die Fertigung vereinfacht, der Materialaufwand vermindert, die Konstruktionsmöglichkeit erweitert und dadurch die Herstellung insgesamt wesentlich verbilligt wird.

Diese Aufgabe wird durch ein Verfahren nach dem Oberbegriff des Patentanspruches 1 erfindungsgemäß durch die kennzeichnenden Merkmale dieses Patentanspruches gelöst.

Weitere Merkmale der Erfindung sind in Unteransprüchen beansprucht.

Durch die Erfindung werden sowohl die Felgenschüssel als auch das Felgenbett über ein Zwischenprodukt aus ein- und derselben Blechronde geformt. Durch dieses Herstellungsverfahren wird der Vorteil erreicht, daß alle Teile aus demselben Ur-Werkstück und damit gleichen Material stammen. Es ist keine Quernaht vorhanden und es werden nur einstückig geschlossene Ringe verwendet, ohne den hohen Fertigungsaufwand von einstückig hergestellten Rädern in Kauf nehmen zu müssen.

Die Erfindung wird nachfolgend anhand von Ausführungsbeispielen, die auch in der Zeichnung dargestellt sind, näher beschrieben. Es zeigen :

Figur 1 ein Zwischenprodukt nach dem Abstrecken der Blechronde und

Figuren 2-6 fertige Felgen vor dem Verschweißen in verschiedenen konstruktiven Ausbildungsformen.

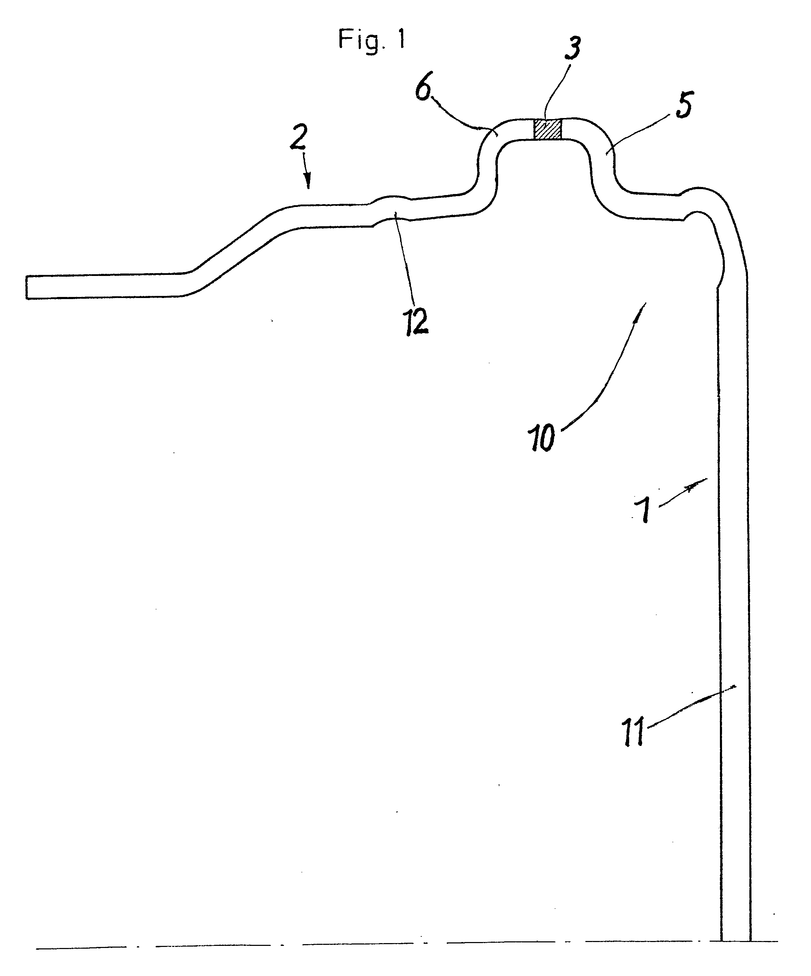

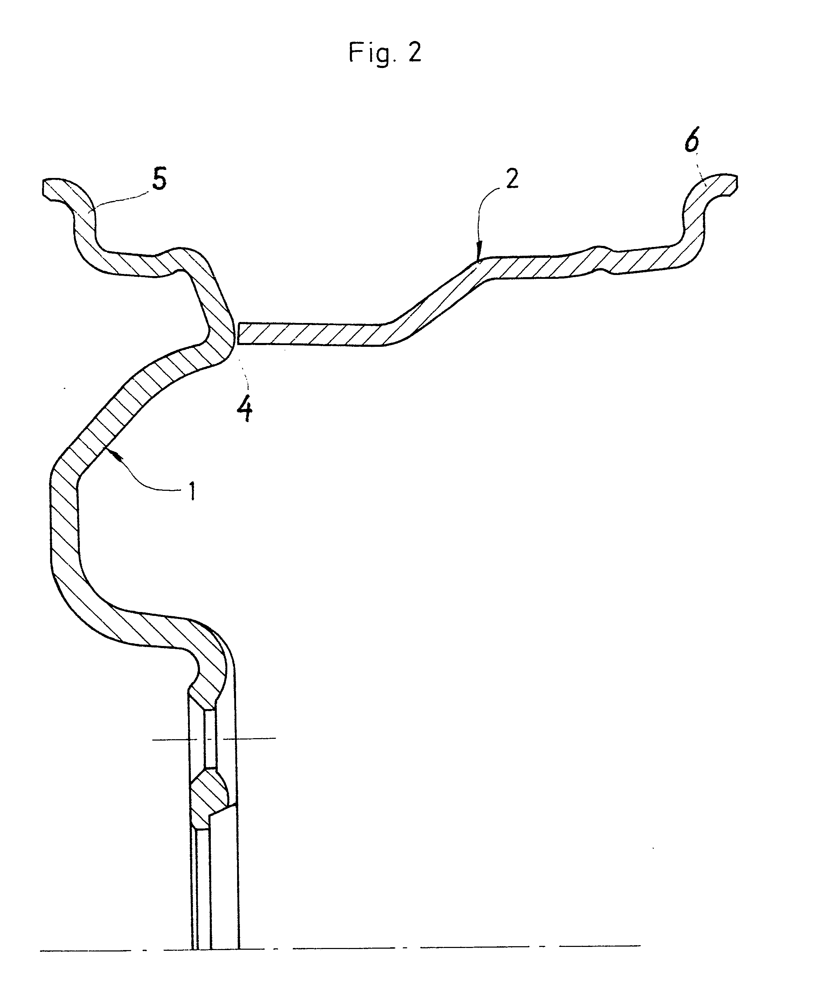

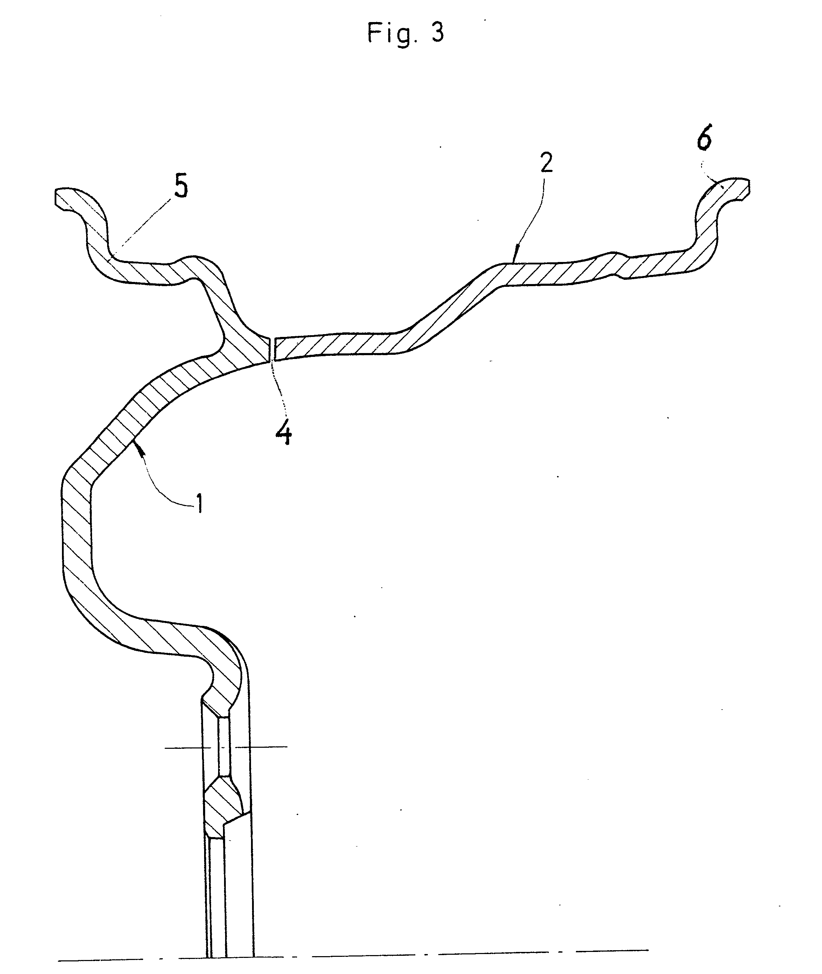

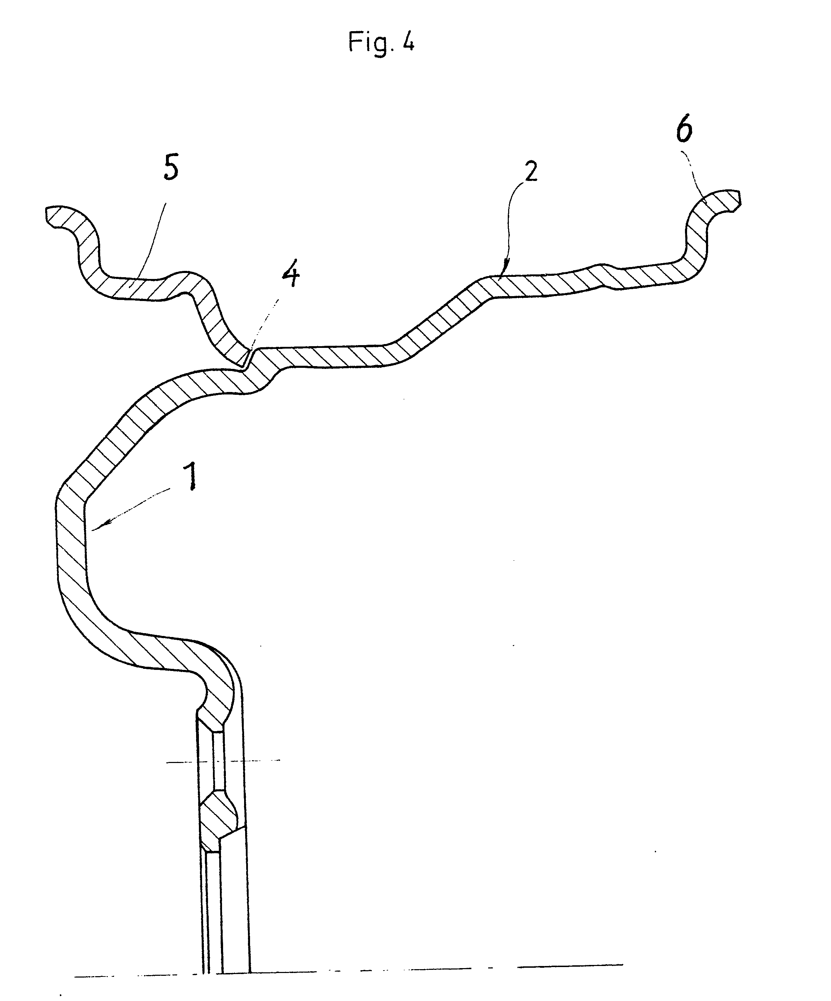

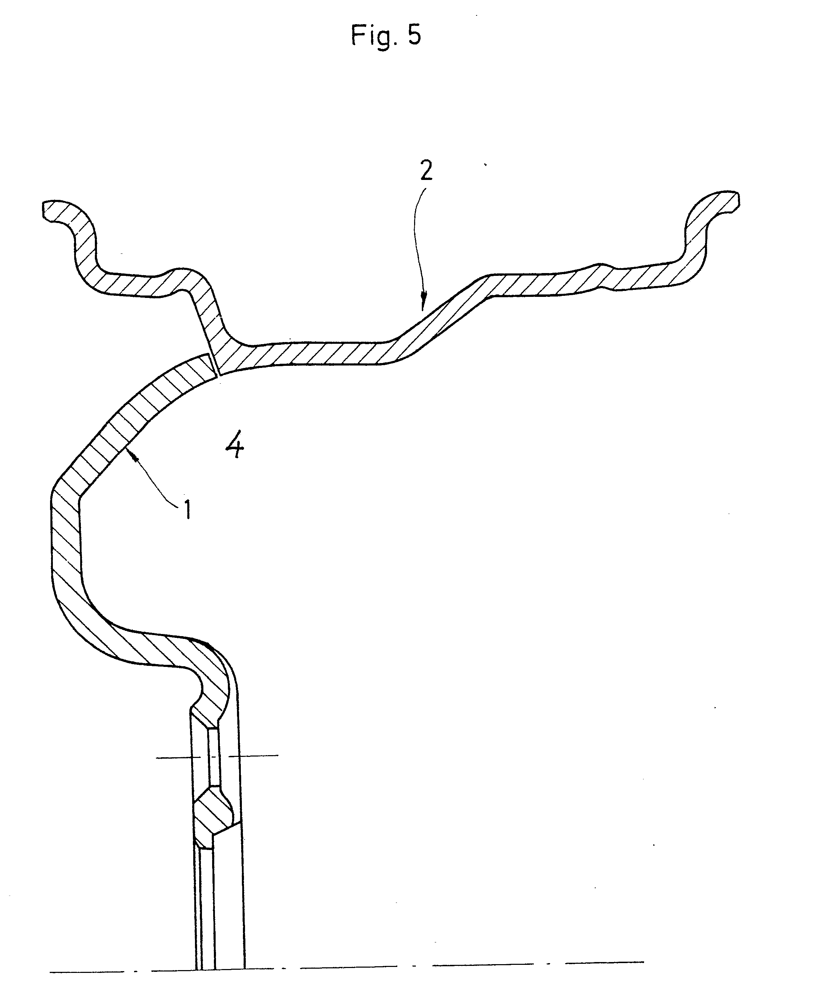

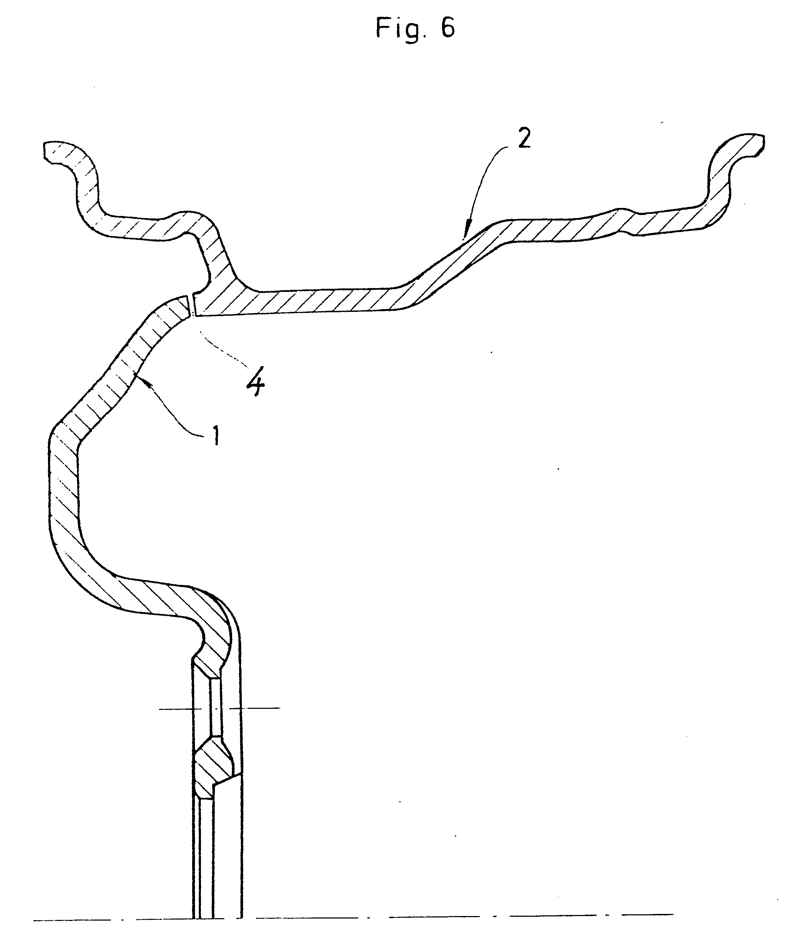

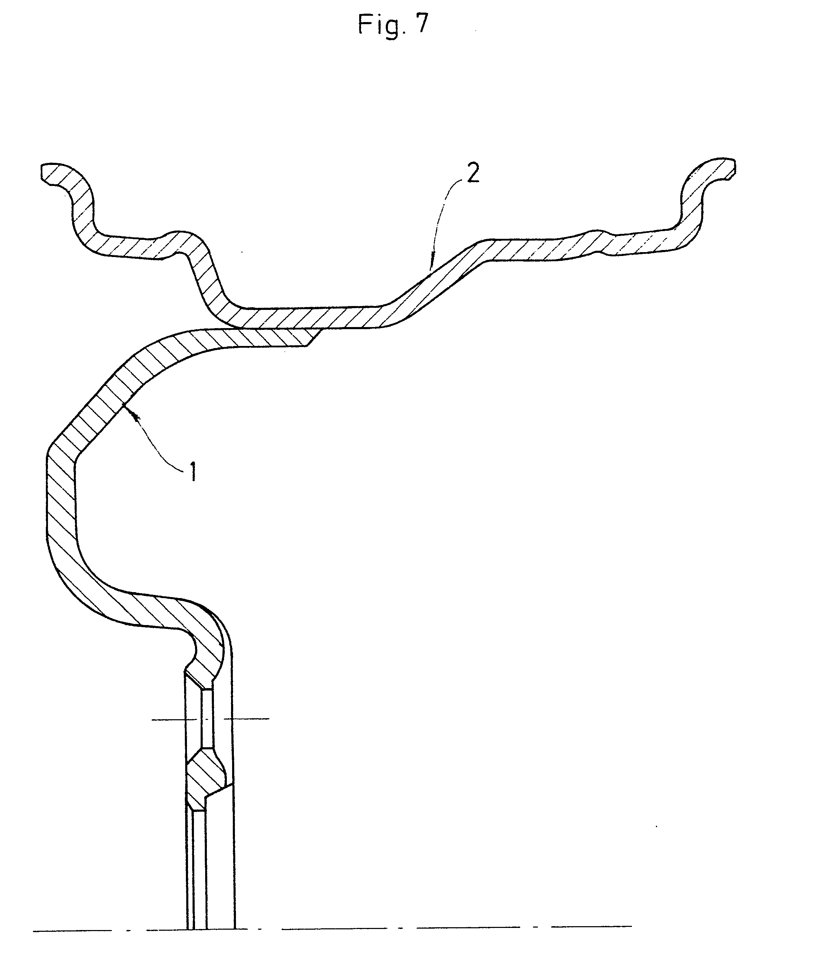

Ausgangspunkt ist in allen Varianten eine Ronde mit entsprechend der Radgröße gewähltem Durchmesser. Die Grundwandstärke der Ronde entspricht den Erfordernissen der statischen und dynamischen Prüfungen und ist beispielshaft mit 7 mm vorgesehen, wie man aus Fig. 1 erkennen kann. Diese Ronde wird zu einem in Fig. 1 dargestellten Zwischenprodukt 10 verarbeitet, wobei zuerst das Abstrecken der Ronde auf einen theoretisch mittleren Durchmesser und eine daraus resultierende Reduzierung der Wandstärke, beispielsweise auf 5 mm, im zylindrischen Teil erfolgt, sodann wird in einem weiteren Arbeitsgang das Abtrennen eines entsprechenden rohrförmigen Ringkörpers 12, der im wesentlichen einem Felgenbett 2 mit einem hinteren Felgenhorn 6 entspricht, von einer Felgenschüssel 1, welche das andere vordere Felgenhorn 5 aufweist, an einer Trennfuge 3 vorgenommen. Die Weiterverarbeitung ist in Varianten möglich, von denen einige beispielsweise beschrieben werden. So erfolgt bei einer Ausführungsform das Aufdrücken des Felgenbettes 2 einschließlich der Felgenhörner 5, 6 auf die Felgenform bzw. die Felgenschüssel 1 und sodann das Pressen der Felgenschüssel 1 entsprechend der Radaufnahme mit gleichzeitigem Stanzen der Bohrungen. Diese Variante weist ein geschlossenes Felgenbett ohne Schweißnaht auf, wie dies in den Fig. 5, 6 und 7 dargestellt ist. Alternativ ist auch ein Drücken der Felgenschüssel 1 mit einem Felgenhorn 5 möglich, wobei das fehlende Felgenbetteil getrennt gedrückt und mittels eines nachfolgend beschriebenen Schweißverfahrens verbunden wird, wie dies die Fig. 2, 3 und 4 zeigen.

Als Schweißverfahren eignen sich außer den herkömmlichen Verfahren, wie Schutzgasschweißungen, die aus Gründen der hohen Fertigungskosten und der technischen Verbreitung hier nicht näher erläutert werden, besonders Verfahren, die außer kurzen kontinuierlichen Taktzeiten auch einstellbare, wiederholbare Parameter aufweisen, da die Blechfelge in der Verbindungsart jedes Sicherheitsrisiko auschließen muß.

Die Reduzierbarkeit der Schweißparameter und der Schweißergebnisse betonend und die daraus resultierende hohe Gleichmäßigkeit der Schweißverbindung beachtend, werden beispielshaft noch das Reibschweißen und die Festkörper-Stumpfschweißung (Al-Forge-Verfahren) er-wähnt. Dabei werden die Ränder der Schwei-ßstellen auf ihren ganzen Umfang erhitzt und die Teile sodann zusammengepreßt, wodurch eine gleichmäßige und verzugs- und spannungsfreie Ringschweißnaht entsteht. Diese Verfahren bedingen erfindungsgemäß keinen besonderen konstruktiven Aufwand, der sich auch in der Form der Schweißnahtvorbereitung ausdrückt.

**Patentansprüche**

1. Verfahren zum Herstellen einer Radfelge aus Aluminium-Knetmaterial für luft- oder gummibereifte Fahrzeuge, bei der ein eine Felgenschüssel (1) bildender Scheibenkörper (11) und ein ein Felgenbett (2) bildender Ringkörper (12) durch eine Ringschweißnaht (4) miteinander verbunden sind, dadurch gekennzeichnet, daß

a) eine abgepaßte Blechronde zu einer topfförmigen Zwischenform (10) gezogen bzw. fließgepreßt wird,

b) von dieser Zwischenform (10) ein Ringkörper (12), der mindestens einen Ergänzungsteil für das Felgenbett (2) bildet, abgetrennt und

c) dieser Ringkörper (12) an einen aus der Rest-Zwischenform bestehenden Scheibenkörper (11) zur Bildung des Felgenbettes (2) wieder angeschweißt wird.

2. Verfahren nach Anspruch 1, dadurch gekennzeichnet, daß von der vorprofilierten Zwischenform (10) ein das vollständige Felgenbett (2) bildender Ringkörper (12) abgetrennt wird (Fig. 5, 6, 7).

3. Verfahren nach Anspruch 1 oder 2, dadurch gekennzeichnet, daß an der aus der Blechronde tiefgezogenen bzw. fließgepreßten Zwischenform (10) bereits sämtliche Profilierungsabschnitte der fertigen Felgenschüssel (1) und des Felgenbettes (2) ausgeformt werden.

4. Verfahren nach einem der Ansprüche 1 bis 3, dadurch gekennzeichnet, daß Felgenschüssel (1) und Felgenbett (2) durch Reibschweißen miteinander verbunden werden.

5. Verfahren nach Anspruch 1, dadurch gekennzeichnet, daß am Scheibenkörper (11) für die Felgenschüssel (1) ein vorderes Felgenhorn (5) und am Ringkörper (12) für das Felgenbett (2) ein hinteres Felgenhorn (6) ausgebildet werden (Fig. 2 und 3).

6. Verfahren nach Anspruch 1, dadurch gekennzeichnet, daß am Scheibenkörper (11) für die Felgenschüssel (1) das hintere Felgenhorn (6) und am Ringkörper das vordere Felgenhorn (5) ausgebildet werden (Fig. 4).

**Claims**

1. Method for the manufacture of a wheelrim of aluminium forging material for vehicles equipped with pneumatic or rubber tyres, the wheelrim having a disc-shaped element (11) forming a rim dish (1) and an annular element (12) forming a rim base (2), the disc-shaped element and the annular element being connected by an annular weld seam (4), characterized in that

a) a measured circular blank is drawn or extruded to a pot-shaped intermediate form (10),

b) an annular element (12) forming at least a supplementary part of the rim base (2) is severed from said intermediate form (10) and

c) said annular element (12) is welded again to a disc-shaped element (11) consisting of the rest of the intermediate form to form the rim base (2).

2. Method according to claim 1, characterized in that an annular element (12) forming the complete rim base (2) is severed from the prepro-filed intermediate form (10) (fig. 5, 6, 7).

3. Method according to claim 1 or 2, characterized in that all profiled portions of the finished rim dish (1) and of the rim base (2) are formed at the intermediate form (10) which is drawn or extruded from the circular blank.

4. Method according to one of the claims 1 to 3, characterized in that the rim dish (1) and the rim base (2) are connected by friction welding.

5. Method according to claim 1, characterized in that at the disc-shaped element (11) for the rim dish (1) a front rim horn (5) and at the annular element (12) for the rim base (2) a rear rim horn (6) is formed (fig. 2 and 3).

6. Method according to claim 1, characterized in that at the disc-shaped element (11) for the rim dish (1) said rear rim horn (6) and at the annular element said front rim horn (5) is formed (fig. 4).

**Revendications**

1. Procédé pour fabriquer une jante en aluminium forgé pour des véhicules montés sur des bandages pneumatiques ou sur des bandages en caoutchouc, selon lequel on relie l'un à l'autre, par un cordon annulaire (4) de soudure, un disque (11) générateur d'un plat de cuvette (1) de jante et un élément annulaire (12) générateur d'une base (2) de jante, procédé caractérisé en ce que :

a) on étire ou extrude un flanc circulaire, de dimension proportionnée, pour obtenir un produit intermédiaire (10) en forme de pot,

b) on sépare de ce produit intermédiaire (10) un élément annulaire (12) qui forme au moins une partie complémentaire de la base (2) de jante, et

c) on soude à nouveau cet élément annulaire (12) sur un disque (11) consistant en le reste du produit intermédiaire pour former la base (2) de la jante.

2. Procédé selon la revendication 1, caractérisé en ce qu'on sépare du produit intermédiaire (10) pré-profilé un élément annulaire (12) générateur de la base (2) complète de jante (figures 5, 6, 7).

3. Procédé selon la revendication 1 ou 2, caractérisé en ce qu'on forme sur le produit intermédiaire (10) obtenu par emboutissage profond ou extrusion du flanc circulaire, tous les tronçons de profilage du plat de cuvette (1) de jante terminée et de la base (2) de jante.

4. Procédé selon l'une des revendications 1 à 3, caractérisé en ce qu'on relie l'un à l'autre, par soudage par friction, le plat de cuvette (1) et la base (2) de jante.

5. Procédé selon la revendication 1, caractérisé en ce qu'on forme sur le disque (11) un rebord avant (5) pour le plat de cuvette (1) et, sur l'élément annulaire (12), un rebord arrière (6) pour la base (2) de jante (figures 2 et 3).

6. Procédé selon la revendication 1, caractérisé en ce qu'on forme sur le disque (11) le rebord arrière (6) du plat de cuvette (1) et, sur l'élément annulaire, on forme le rebord avant (5) de la jante (figure 4).

Fig. 1

Fig. 2

Fig. 3

0 054 931

Fig. 4

Fig. 5

# Fig. 6

## Fig. 7